# EUROPÄISCHE PATENTSCHRIFT

(11) **EP 2 898 252 B1**
(45) Veröffentlichungstag und Bekanntmachung des Hinweises auf die Patenterteilung: **06.07.2016**
(21) Anmeldenummer: 13762744.4
(22) Anmeldetag: 28.08.2013
(51) Int. Cl.: F16L 37/098, F16D 48/02

(54) **DÄMPFUNGSEINRICHTUNG ZUR DÄMPFUNG VON DRUCKSCHWINGUNGEN INNERHALB EINER DRUCK-LEITUNG SOWIE KUPPLUNGSBETÄTIGUNGSEINRICHTUNG UND ENTSPRECHENDES KRAFTFAHRZEUG**
DAMPING DEVICE FOR DAMPING PRESSURE OSCILLATIONS INSIDE A PRESSURE LINE, AND CLUTCH ACTUATION DEVICE AND CORRESPONDING MOTOR VEHICLE
DISPOSITIF D'AMORTISSEMENT DESTINÉ À AMORTIR DES PULSATIONS DE PRESSION À L'INTÉRIEUR D'UNE CONDUITE DE REFOULEMENT ET DISPOSITIF D'ACTIONNEMENT D'EMBRAYAGE ET VÉHICULE AUTOMOBILE CORRESPONDANT

(30) Priorität: 19.09.2012 DE 102012216728
(43) Veröffentlichungstag der Anmeldung: 29.07.2015
(73) Patentinhaber: Schaeffler Technologies AG & Co. KG, 91074 Herzogenaurach (DE)
(72) Erfinder: BERTHELEMY, Pierre-Yves, F-67460 Souffelweyersheim (FR)
(86) Internationale Anmeldenummer: PCT/DE2013/200143
(87) Internationale Veröffentlichungsnummer: WO 2014/044270

(56) Entgegenhaltungen:
- EP-A2- 0 955 470
- WO-A1-2012/107019
- DE-A1-102007 056 882
- DE-A1-102011 014 938

## Beschreibung

Die vorliegende Erfindung betrifft eine Dämpfungseinrichtung zur Dämpfung von Druckschwingungen innerhalb einer Druckleitung, die insbesondere ein Teil einer Kupplungsbetätigungseinrichtung zur Betätigung einer Kupplung in einem Kraftfahrzeug sein kann, eine engsprechende Kupplungsbetätigungseinrichtung und ein entsprechendes Kraftfahrzeug.

Üblicherweise werden Kupplungen in Kraftfahrzeugen hydraulisch betätigt. Das bedeutet, dass ein entsprechender Betätigungsimpuls beispielsweise durch Betätigen eines Kupplungspedals auf einen Geberzylinder und von diesem hydraulisch auf einen Nehmerzylinder übertragen wird, der die eigentliche Betätigung der Kupplung bewirkt, beispielsweise indem er ein Ausrücklager oder ähnliches axial verschiebt. Druckschwingungen bei der hydraulischen Übertragung solcher Impulse sind unerwünscht, da sie insbesondere zu einem spürbaren Pulsieren des Kupplungspedals bei manuell geschalteten Getrieben und zu Geräuschen beim Betätigen der Kupplung führen und zu einer ungenauen Definition des Betätigungspunktes der Kupplung führen können. Zum Dämpfen solcher Druckschwingungen ist es beispielsweise bekannt, einen nach Art eines Helmholtz-Resonators arbeitenden Dämpfer mit der entsprechenden Druckleitung vom Geberzylinder zum Nehmerzylinder zu kombinieren. Das Dämpfungselement umfasst dabei ein Gehäuse, eine Hülse und einen Deckel. Beim Verbinden des Dämpfungselements mit der Druckleitung wird zunächst die Hülse mit einer entsprechenden Druckleitung verschweißt und diese dann in das Gehäuse eingepresst, welches mit dem Deckel verschlossen wird. Es ist also zwingend notwendig, die Hülse vor Montage des Dämpfungselements mit der Druckleitung zu verbinden. Dies schränkt die Möglichkeiten bei der Montage eines solchen Dämpfungselements ein, zudem erfolgt die Verbindung zwischen Hülse und Druckleitung hier durch eine stoffschlüssige Verbindung wie beispielsweise Schweißen. Da nicht alle Materialien miteinander verschweißt werden können, schränkt dies die Materialwahl bei Wahl des Materials der Hülse und der Druckleitung ein.

Eine weitere Dämpfungseinrichtung ist aus WO 2012/107019 bekannt.

Hiervon ausgehend liegt der vorliegenden Erfindung die Aufgabe zugrunde, die aus dem Stand der Technik bekannten Nachteile zumindest teilweise zu überwinden. Insbesondere soll eine Dämpfungseinrichtung vorgeschlagen werden, bei der eine größere Freiheit bei der Materialwahl zwischen Druckleitung und Hülse möglich ist und bei der die Dämpfungseinrichtung vormontiert werden kann, bevor diese in Kontakt mit der Druckleitung kommt.

Diese Aufgaben werden gelöst durch eine Dämpfungseinrichtung mit den Merkmalen des Anspruchs 1 sowie durch eine Kupplungsbetätigungseinrichtung und ein Kraftfahrzeug mit den Merkmalen der entsprechenden unabhängigen Ansprüche. Die jeweiligen abhängigen Ansprüche sind auf vorteilhafte Weiterbildungen gerichtet.

Die erfindungsgemäße Dämpfungseinrichtung dient zur Dämpfung von Druckschwingungen innerhalb einer Druckleitung. Insbesondere ist eine solche Druckleitung Teil einer Kupplungsbetätigungseinrichtung zur Betätigung der Kupplung eines Kraftfahrzeugs. Die Dämpfungseinrichtung weist ein auf der Basis eines Helmholtz-Resonators arbeitendes hohlzylindrisches, ein Dämpfervolumen bildendes doppelwandiges Gehäuse auf, wobei im Gehäuse eine Hülse zur Aufnahme der Druckleitung in dem Gehäuse ausgebildet ist. Es sind Verbindungsmittel zur Ausbildung einer kraft- und/oder formschlüssigen Verbindung zwischen der Druckleitung und mindestens einem der folgenden Elemente ausgebildet:
a) der Hülse und
b) dem Gehäuse.

Die Dämpfungseinrichtung wird auch als Koaxialtilger bezeichnet und arbeitet insbesondere nach Art eines Tilgers. Unter einem Helmholtz-Resonator wird ein Element verstanden, das als Druckspeicher dient und als federndes Element fungiert. In diesem federnden Element kann damit potentielle Energie gespeichert werden, die zur Deämpfung von Schwingungen einzelner Frequenzen oder von Frequenzbändern dienen kann. Hierbei ist die hydraulische Kapazität des entsprechenden Behälters bevorzugt so abgestimmt, dass die Eigenfrequenz dieses Helmholtz-Resonators der zu filternden Frequenz entspricht. Helmholtz-Resonatoren können sehr effektiv ein bestimmtes Frequenzband filtern und damit tilgen, wodurch die Vibrationen am Pedal und die Geräusche während der Kupplungsbetätigung stark reduziert werden. Die Bandbreite des Filters steigt mit der Kapazität des Behälters. Eine weitere Größe, die Einfluss auf die Bandbreite des Filters hat, ist die Steifigkeit des Behälters. Je nachgiebiger der als Speicher fungierende entsprechende Behälter ist, desto breitbandiger ist die Tilgungswirkung.

Die Frequenzabstimmung der Tilgung von Schwingungen mittels einer wie ein Helmholtz-Resonator arbeitenden Dämpfungseinrichtung ist dabei abhängig von der Steifigkeit des Gehäuses der Dämpfungseinrichtung, der Länge des Gehäuses der Dämpfungseinrichtung und dem Querschnitts der Druckleitung als Zuleitung für die Dämpfungseinrichtung. Bei der vorliegenden Dämpfungseinrichtung handelt es sich um eine koaxial aufgebaute Dämpfungseinrichtung. Der Behälter ist hohlzylindrisch ausgebildet und bildet ein Dämpfervölumen durch ein doppelwandiges Gehäuse. Bevorzugt ist das Gehäuse so ausgebildet, dass eine Innenwandung des hohlzylindrischen Gehäuses zumindest in einem axialen Teilbereich dem Außendurchmesser der entsprechenden Druckleitung entspricht, so dass diese im Inneren des hohlzylindrischen Gehäuses aufgenommen werden kann.

Bevorzugt ist eine Ausgestaltung, bei der die Hülse im Gehäuse verspannt ist, wobei beispielsweise an zumindest einer Stelle der Innenfläche der äußeren Wand des Gehäuses eine Rampe für eine Ausnehmung eingebracht ist, die, ausgehend von dessen Öffnung, derart ausgebildet ist, dass in diesem Bereich die Stärke der äußeren Wand des Gehäuses in Richtung Gehäuseinneres zunimmt. Dadurch nimmt die radiale Spannung zu, je weiter die Hülse in das Gehäuse eingebracht wird. Bevorzugt ist eine Ausgestaltung, bei der die Hülse mindestens einen die Hülse in axialer Richtung verlängernden Fortsatz aufweist und eine Feder oder ein federartiges Element, wobei die Hülse über diesen Fortsatz im Kanal geführt und mittels der Feder oder des federartigen Elementes im Gehäuse radial und axial verspannt wird. Auf diese Weise wird sichergestellt, dass sich die Hülse im Gehäuse nicht relativ zum Gehäuse verdreht.

Unter dem Verbindungsmittel werden insbesondere Rasthaken oder Schnapphaken sowie entsprechende zu diesen korrespondierende Ausnehmungen verstanden sowie Reibflächen oder Kombinationen mindestens zweier dieser Elemente.

Die Ausbildung von Verbindungsmitteln zur kraft- und/oder formschlüssigen Verbindung der entsprechenden Dämpfungseinrichtung stellt eine signifikante Verbesserung im Vergleich zu aus dem Stand der Technik bekannten Lösungen dar, da eine kraft- und/oder formschlüssige Verbindung zwischen vielen unterschiedlichen Materialkombinationen möglich ist und deren Einsatzmöglichkeit beispielsweise durch die Elastizität eines der beiden Partner beispielsweise bei Ausbildung einer Schnapp- oder Rastverbindung limitiert ist. Gegebenenfalls ist es notwendig, zur Abdichtung der Druckleitung gegenüber dem Gehäuse beziehungsweise der Hülse ein Dichtmittel wie beispielsweise einen Dichtring, bevorzugt einen elastomeren Dichtring, insbesondere einen O-Ring vorzusehen. Da bei der erfindungsgemäßen Lösung auf die Ausbildung einer stoffschlüssigen Verbindung zwischen Hülse und Druckleitung verzichtet werden kann, ist es möglich, die Dämpfungseinrichtung vor Montage der Druckleitung vorzumontieren. So kann der Montageprozess von entsprechenden Kupplungsbetätigungseinrichtungen vereinfacht werden.

Gemäß einer vorteilhaften Ausgestaltung der Dämpfungseinrichtung sind die Verbindungsmittel zur Ausbildung einer Schnappverbindung geeignet und bestimmt.

Insbesondere weist die Hülle und/oder das Gehäuse mindestens einen Schnapphaken zur Verbindung mit mindestens einer korrespondierenden Ausnehmung an der Druckleitung und/oder das Gehäuse und/oder die Hülle weist mindestens eine Ausnehmung zur Aufnahme mindestens eines Schnapphakens der Druckleitung auf. Bevorzugt sind die Verbindungsmittel so ausgebildet, dass sie über den gesamten Umfang der Druckleitung gesehen eine gleichmäßige Verbindung zwischen Druckleitung und Hülse und/oder Gehäuse erlauben. Beispielsweise können mehrere Schnapphaken an Hülse und/oder Gehäuse ausgebildet sein, die über den Umfang gleichmäßig verteilt sind.

Gemäß einer vorteilhaften Ausgestaltung der erfindungsgemäßen Dämpfungseinrichtung sind Druckleitung und Hülse und/oder Gehäuse über eine Schnappverbindung miteinander verbindbar. Besonders bevorzugt ist eine Ausgestaltung, bei der die Hülse und/oder das Gehäuse innenseitig mindestens einen Schnapphaken aufweist.

Somit ist die Hülse und/oder das Gehäuse mit einer Druckleitung verbindbar, die außenseitig mindestens eine bevorzugt umlaufende Ausnehmung oder Aufnahme zur Verbindung mit dem Schnapphaken aufweist. So ist es möglich, die Hülse mit dem Gehäuse zu verbinden, beispielsweise die Hülse in dieses einzupressen und dann in einem späteren Schritt die Leitung in die Dämpfungseinrichtung bis zur Ausbildung der Schnappverbindung einzudrücken.

Alternativ ist es auch möglich, am Gehäuse und/oder an der Hülse entsprechende Ausnehmungen als Verbindungsmittel und an der Außenfläche der Druckleitung entsprechende Schnapphaken vorzusehen, so dass auf diese Weise durch die korrespondierenden Verbindungselemente eine Schnappverbindung zwischen Druckleitung und Gehäuse und/oder Hülse hergestellt werden kann.

Gemäß einer weiteren vorteilhaften Ausgestaltung ist die Hülse mit dem Gehäuse verpresst.

Hier kann es vorteilhaft sein, durch entsprechende Federmittel eine radiale und/oder axiale Verspannung der Hülse im Gehäuse vorzusehen, um so ein späteres Verdrehen oder Lösen der Hülse aus dem Gehäuse zu verhindern. Bevorzugt erfolgt dabei eine Montage der Hülse so, dass die Hülse in das entsprechende Gehäuse eingepresst und dann endseitig mit dem entsprechenden Deckel verschlossen wird. So wird eine vormontierte Dämpfungseinrichtung hergestellt, die im späteren Montageprozess mit einer entsprechenden Druckleitung einfach verbunden werden kann, beispielsweise durch ein einfaches Einschieben der Druckleitung in die vormontierte Dämpfungseinrichtung. Grundsätzlich bevorzugt ist die Ausgestaltung der Dämpfungseinrichtung aus einem Kunststoff, bevorzugt aus einem thermoplastischen Werkstoff.

Gemäß einem weiteren Aspekt der vorliegenden Erfindung wird eine Kupplungsbetätigungseinrichtung, insbesondere zur Betätigung einer Kupplung eines Kraftfahrzeugs vorgeschlagen, mit einer hydraulischen Strecke, umfassend mindestens eine Dämpfungseinrichtung nach der vorliegenden Erfindung, und einen Geber- und einen Nehmerzylinder, die über die Druckleitung miteinander verbunden sind.

Hierbei handelt es sich insbesondere um eine Reibkupplung, bei der Drehmoment von einer Eingangsseite zu einer Ausgangsseite lösbar reibschlüssig übertragen werden kann. Insbesondere kann dabei die Eingangsseite der Reibkupplung mit einer Abtriebswelle einer Antriebseinheit eines Kraftfahrzeugs und die Ausgangsseite mit einer Antriebseinheit beispielsweise umfassend ein Getriebe verbunden sein.

Geber- und Nehmerzylinder sind über die Druckleitung miteinander verbunden. Die Druckleitung ist üblicherweise ihrem Volumen entsprechend mit einem Hydraulikfluid, beispielsweise einem Öl, insbesondere einem Mineralöl oder einem synthetischen Öl gefüllt. Bei Betätigung des Geberzylinders, beispielsweise durch ein Kupplungspedal, wird dabei hydraulisch eine entsprechende Betätigung des Nehmerzylinders bewirkt. Bevorzugt ist dabei, die Eigenfrequenz der verwendeten erfindungsgemäßen Dämpfungseinrichtung auf die zu filternde Frequenz der Kupplungsbetätigungseinrichtung abzustimmen. Über die Betätigung des Nehmerzylinders wird im Betrieb eine Betätigung der Kupplung bewirkt, beispielsweise indem durch den Nehmerzylinder ein entsprechendes Ausrücklager oder ähnliches bewegt wird. Die erfindungsgemäße Kupplungseinrichtung erlaubt in vorteilhafter Weise platzeffektiv eine Tilgung von entsprechenden Frequenzbereichen und Frequenzbändern, bei der Dämpfungseinrichtung und Druckleitung aus Materialien ausgebildet sein können, die nicht oder nicht gut stoffschlüssig miteinander verbindbar sind oder deren stoffschlüssige Verbindung aufwendig oder schlecht dichtend möglich ist. Beispielsweise ist es möglich, die Druckleitung aus einem metallischen Werkstoff, beispielsweise einem Stahl auszubilden und die entsprechende Hülse der erfindungsgemäßen Dämpfungseinrichtung aus Kunststoff.

Gemäß einer weiteren vorteilhaften Ausgestaltung der Kupplungsbetätigungseinrichtung weist die Druckleitung in einem Verbindungsbereich mindestens eine Ausnehmung auf, die mit mindestens einem Schnapphaken an mindestens einem der folgenden Elemente der Dämpfungseinrichtung zur Bildung einer Schnappverbindung zwischen Hülse und Druckleitung korrespondiert:
a) der Hülse und
b) dem Gehäuse.

Die Ausbildung einer entsprechenden Ausnehmung in einem Verbindungsbereich einer Druckleitung zur Aufnahme eines korrespondierenden Schnapphakens an Hülse und/oder Gehäuse ist einfach möglich, beispielsweise insbesondere dann, wenn die Druckleitung aus einem metallischen Werkstoff hergestellt ist. Die Ausbildung von einem oder mehreren, bevorzugt rotationssymmetrisch um die Achse der Druckleitung ausgebildeten Schnapphaken ermöglicht in einfacher Weise die nötige Elastizität und Verformbarkeit zur Ausbildung einer Schnappverbindung beim Einschieben der Druckleitung in die Hülse.

Gemäß einer weiteren vorteilhaften Ausgestaltung ist die Druckleitung aus einem metallischen Werkstoff ausgebildet.

Je nach Verhältnissen im entsprechenden Einsatzbereich der Kupplungsbetätigungseinrichtung ist es vorteilhaft, Stahlleitungen als Druckleitungen zu verwenden. Bei Druckleitungen aus Stahl war es mit den aus dem Stand der Technik bekannten Lösungen nur schwer möglich, eine entsprechende koaxial ausgebildete Dämpfungseinrichtung mit der entsprechenden Druckleitung zu verbinden. Dies ist mit der erfindungsgemäßen Lösung einer Dämpfungseinrichtung problemlos möglich.

Gemäß einem weiteren Aspekt wird ein Kraftfahrzeug aufweisend eine Antriebseinheit mit einer Abtriebswelle, einem Antriebsstrang und einer Reibkupplung zum lösbaren Verbinden der Abtriebswelle mit dem Antriebsstrang vorgeschlagen, wobei eine erfindungsgemäße Kupplungsbetätigungseinrichtung vorgesehen ist. Bevorzugt ist die Antriebseinheit im Kraftfahrzeug vor einer Fahrerkabine und quer zu einer Längsachse des Kraftfahrzeugs angeordnet.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Kupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Nachstelleinrichtung beziehungsweise Reibkupplung ist für Kleinwagen besonders vorteilhaft, weil die Gesamtbaugröße klein ist und zugleich eine äußerste zuverlässige Nachstellung erreicht wird. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein erstes Beispiel einer Dämpfungseinrichtung im Längsschnitt;
- Fig. 2:: eine Hülse eines ersten Beispiels einer Dämpfungseinrichtung in einer perspektivischen Ansicht;
- Fig. 3:: eine Druckleitung für ein erstes Beispiel einer Dämpfungseinrichtung im Längsschnitt;
- Fig. 4, 5:: Montageschritte bei der Montage einer Druckleitung in einem ersten Beispiel einer Dämpfungseinrichtung;
- Fig. 6: eine teilgeschnittene perspektivische Darstellung eines ersten Beispiels einer montierten Dämpfungseinrichtung;
- Fig. 7: das erste Beispiel einer Dämpfungseinrichtung im montierten Zustand im Schnitt;
- Fig. 8: ein zweites Beispiel einer Dämpfungseinrichtung im Längsschnitt;
- Fig. 9:: das zweite Beispiel einer Dämpfungseinrichtung in einer perspektivischen Ansicht;
- Fig. 10:: das zweite Beispiel einer Dämpfungseinrichtung im Längsschnitts
- Fig. 11:: ein Beispiel einer entsprechenden Kupplungsbetätigungseinrichtung; und
- Fig. 12:: ein Beispiel eines entsprechenden Kraftfahrzeugs.

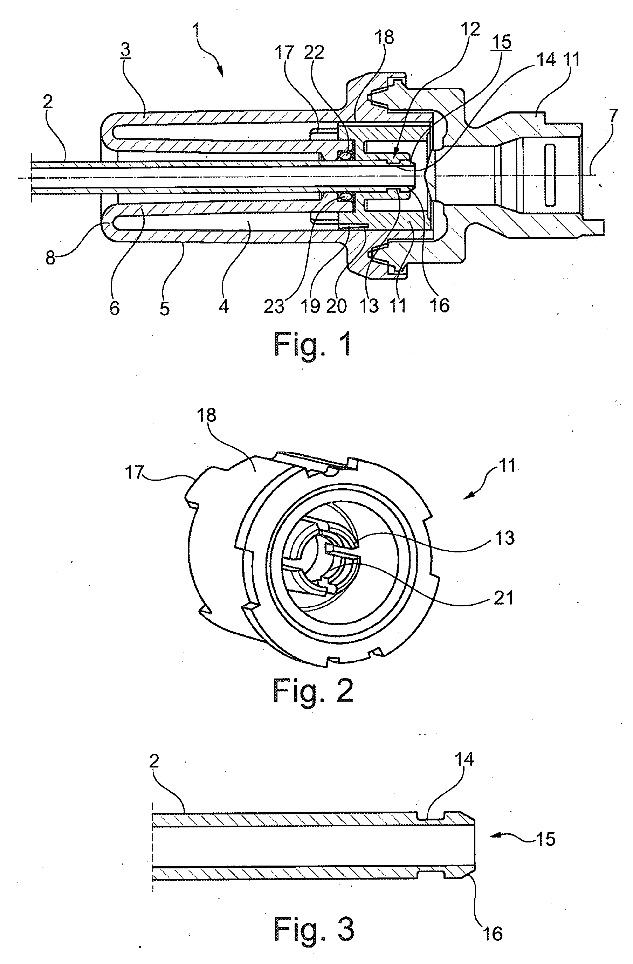

Fig. 1 zeigt schematisch eine Dämpfungseinrichtung 1 zur Dämpfung von Druckschwingungen innerhalb einer Druckleitung 2. Insbesondere kann diese Dämpfungseinrichtung 1 in einer Kupplungsbetätigungseinrichtung zur Betätigung einer Kupplung eines Kraftfahrzeugs eingesetzt werden. Die Dämpfungseinrichtung 1 arbeitet nach Art eines Helmholtz-Resonators. Die Dämpfungseinrichtung 1 weist ein Gehäuse 3 auf, welches ein Dämpfervolumen 4 bildet. Das Dämpfervolumen 4 ist dabei radial außenseitig durch eine Außenwand 5 und radial innenseitig durch eine Innenwand 6 begrenzt. Das Dämpfervolumen 4 umschließt also die Druckleitung 2 koaxial. Das Dämpfervolumen 4 ist in Richtung einer Längsachse 7 an einer Seite durch eine Stirnwand 8 und in Richtung der Längsachse 7 in einer entgegengesetzten Richtung durch einen Deckel 9 begrenzt. Der Deckel 9 verschließt also eine endseitige Öffnung 10 des Gehäuses 3. Das Dämpfervolumen 4 ist also in dem hohlzylindrischen Gehäuse 3 ausgebildet.

Die Dämpfungseinrichtung 1 weist ferner eine Hülse 11 auf, die im Gehäuse 3 ausgebildet und dort festgelegt ist. Die Hülse 11 dient der Aufnahme der Druckleitung 2 im Gehäuse 3. Die Hülse 11 weist Verbindungsmittel 12 zur Ausbildung einer kraft- und/oder formschlüssigen Verbindung zwischen Druckleitung 2 und Hülse 11 auf. Die Verbindungsmittel 12 sind als Schnapphaken 13 ausgebildet. Außenseitig weist die Druckleitung 2 eine entsprechende Aufnahme 14 oder Ausnehmung auf, in die die Schnapphaken 13 zur Ausbildung einer SchnappVerbindung eingreifen. Die Druckleitung 2 ist dabei im Bereich eines Kopfs 15 mit einer Fase 16 ausgebildet, die das Einführen und Zentrieren der Druckleitung 2 in der Hülse 11 vereinfachen.

Der Deckel 9 wird bevorzugt mit dem Gehäuse 3 verschweißt. Bevorzugt werden die Außenwand 5 und die Innenwand 6 des Gehäuses 3 dadurch gebildet, dass die Außenwand 5 nach einer bestimmten Länge in den Hohlzylinder eingeschlagen wird, so dass die einstige Außenwand ab dieser Umlenkung zur Innenwand 6 wird. Das Dämpfervolumen 4 ist durch einen Spalt zwischen Außenwand 5 und Innenwand 6 gekennzeichnet, der sich in Richtung der Hülse 11 vergrößert. Die Hülse 11 ist im Inneren des so gebildeten Gehäuses 3 angeordnet. Die Hülse 11 ist bevorzugt hohlzylindrisch. Die Hülse 11 weist Fortsätze 17 auf, die eine äußere Mantelfläche 18 der Hülse 11 in Richtung der Längsachse 7 hin verlängern. Diese Fortsätze 18 sind über den Umfang der Hülse 11 verteilt an der entsprechenden Stirnfläche angeordnet und dienen zur Positionierung der Hülse 11 vor dem Einpressen in das Gehäuse 3. Mit den Fortsätzen 17 greift die Hülse 11 in das Dämpfervolumen 4 des Gehäuses 2 ein.

Die Hülse 11 weist einen Schlitz 19 auf, der dem entsprechenden Bereich der äußeren Mantelfläche 18 eine federförmige Ausgestaltung gibt. Diese wirkt mit einer Rampe 20 in der Innenfläche des Gehäuses 3 zusammen, so dass die Hülse 11 beim Einpressen in das Gehäuse 3 verdrehsicher positioniert wird. Die Hülse 11 kann sich dadurch weder in radialer Richtung noch in axialer Richtung gegenüber dem Gehäuse 3 bewegen.

Fig. 2 zeigt schematisch eine Hülse 11 in perspektivischer Ansicht. Die Hülse 11 weist vier über den Umfang gleichmäßig verteilte Schnapphaken 13 auf, andere Anzahlen von Schnapphaken wie beispielsweise sechs oder eine ungleichförmige Verteilung in Umfangsrichtung sind ebenfalls möglich. Die Hülse 11 weist ferner eine innere Mantelfläche 21 auf zur Anlage an der äußeren Fläche der Druckleitung 2.

Fig. 3 zeigt schematisch im Längsschnitt eine Druckleitung 2. Das Innere der Druckleitung 2 ist im Betrieb mit Hydraulikmedium gefüllt. Die Druckleitung 2 weist im Bereich eines Kopfs 15 Fasen 16 auf. Ferner weist die Druckleitung 2 Aufnahmen 14 für die Aufnahme der Schnapphaken 13 der Hülse 11 auf. Diese Aufnahmen 14 sind korrespondierend zu den Schnapphaken ausgestaltet, so dass beim Einführen der Druckleitung 2 über die Fasen 16 im Bereich des Kopfs 15 eine Zentrierung und Ausrichtung der Druckleitung 2 relativ zur Hülse 11 erfolgt und dann durch eine elastische Verformung der Schnapphaken 13 diese sich aufweiten, ein Hindurchgleiten der Druckleitung 2 ermöglichen und dann in die Aufnahmen 14 einschnappen.

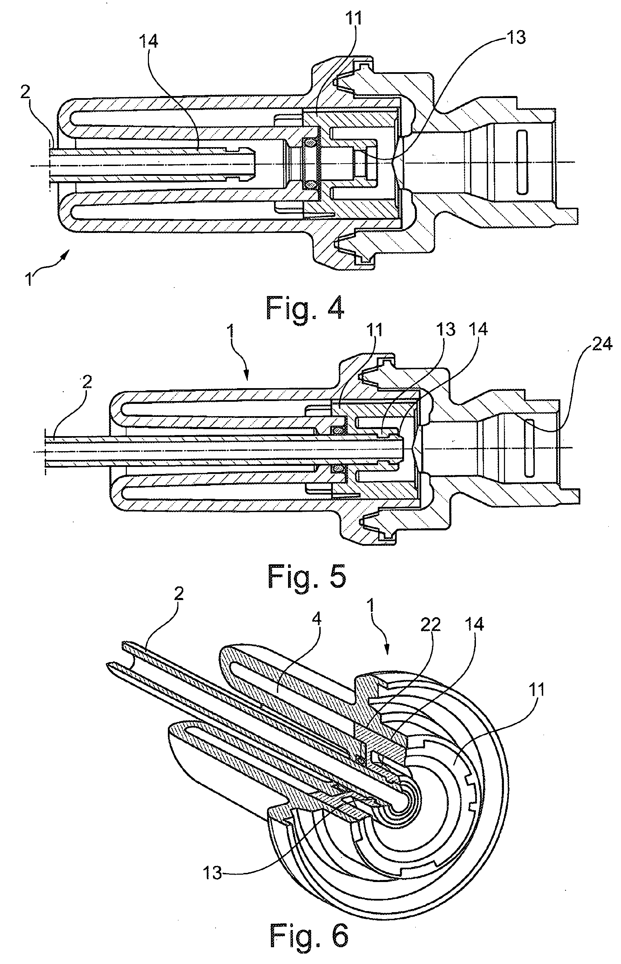

Dieser Vorgang wird auch in den Fig. 4 und 5 gezeigt. Fig. 4 zeigt die Druckleitung 2 vor Erreichen der Hülse 11. Fig. 5 zeigt die Druckleitung 2 nach Ausbildung der Schnappverbindung zwischen Schnapphaken 13 und Aufnahme 14. Die Aufnahme 14 ist kreisringförmig um den gesamten Umfang der Druckleitung 2 ausgebildet. Zur Abdichtung gegenüber dem Dämpfervolumen 4 ist ein Dichtmittel 22 in Form eines O-Rings 23 ausgebildet. Nach der in Fig. 5 gezeigten Montage der Druckleitung 2 zur Dämpfungseinrichtung 1 kann im Betrieb das Druckmedium aus der Druckleitung 2 durch die Hülse bei entsprechender Dämpfung im Dämpfervolumen 4 durch den Ausgang 24 aus der Dämpfungseinrichtung 1 strömen.

Fig. 6 zeigt eine weitere teilweise geschnittene perspektivische Darstellung der Dämpfüngseinrichtung 1 im montierten Zustand. Die Druckleitung 2 ist über die Schnappverbindung gebildet aus den an der Hülse 11 ausgebildeten Schnapphaken 13 und der in der Außenfläche der Druckleitung 2 ausgebildeten Aufnahme 14 mit der Dämpfungseinrichtung 1 verbunden, über das Dichtmittel 22 ist eine druckdichte Abdichtung der Druckleitung 2 gegenüber der Dämpfungseinrichtung 1 erfolgt. Im Betrieb wirkt das Dämpfervolumen 4 als Helmholtz-Resonator zur Dämpfung von Druckschwingungen, die zu ungewollten Vibrationen beim Betrieb einer Kupplungsbetätigungseinrichtung führen.

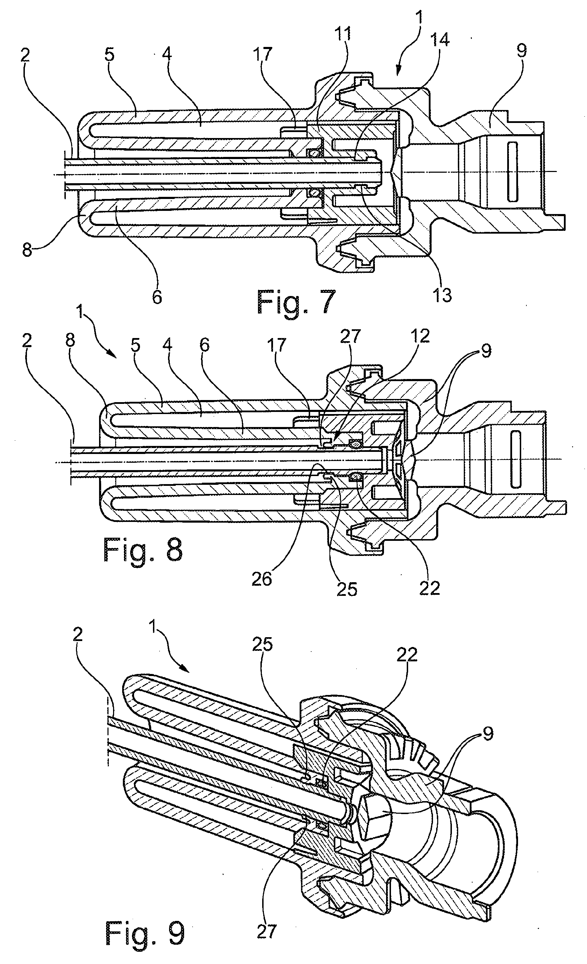

Fig. 7 zeigt die Dämpfungseinrichtung 1 im mit der Druckleitung 2 verbundenen Zustand im Schnitt. Gleiche Elemente sind hier mit gleichen Bezugszeichen versehen. Es wird auf die obige Beschreibung zu diesem Beispiel einer Dämpfungseinrichtung 1 verwiesen.

Fig. 8 zeigt ein weiteres Beispiel einer Dämpfungseinrichtung 1. Hier sollen nur die Unterschiede zum ersten Beispiel der Dämpfungseinrichtung 1 geschildert werden, gleiche Elemente sind mit gleichen Bezugszeichen versehen. Insoweit wird auf die Beschreibung zum ersten Beispiel der Dämpfungseinrichtung 1 verwiesen. Im Unterschied zum ersten Beispiel sind hier als Verbindungsmittel 12 am Gehäuse 3 Schnapphaken 25 mit jeweils einer Fase 26 ausgebildet. Ein solcher Schnapphaken 25 greift in eine entsprechende Aufnahme 27 an der Druckleitung 2 ein und bildet so die formschlüssige Verbindung als Schnappverbindung zwischen Druckleitung 2 und Dämpfungseinrichtung 1 aus.

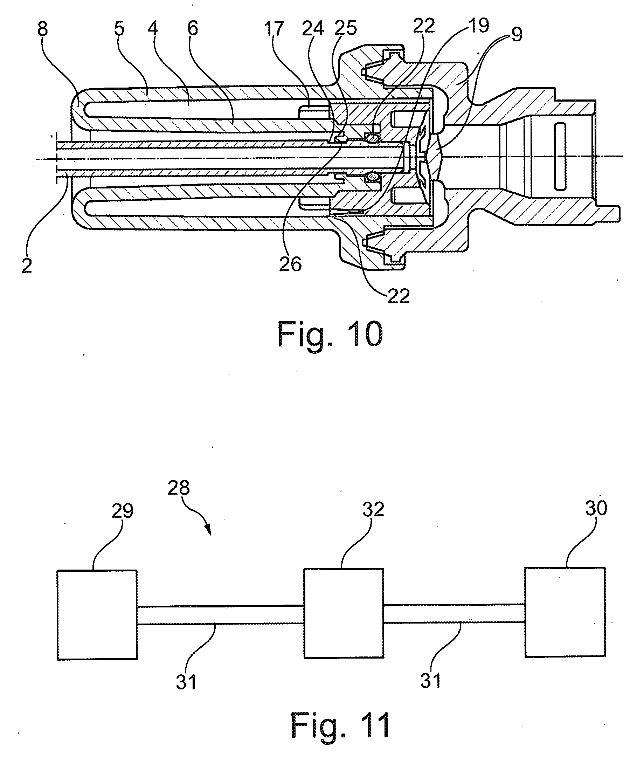

Fig. 9 zeigt das zweite Beispiel der Dämpfungseinrichtung 1 im montierten Zustand in einer teilweise geschnittenen perspektivischen Ansicht, Fig. 10 zeigt diese Verbindung im Längsschnitt. Auf die oben gegebene Beschreibung wird verwiesen.

Fig. 11 zeigt eine Kupplungsbetätigungseinrichtung 28. Diese umfasst einen Geberzylinder 29 und einen Nehmerzylinder 30, die durch eine Druckleitung 31 miteinander verbunden sind. In der Druckleitung 31 ist eine Dämpfungseinrichtung 32 ausgebildet, die einer in diesem Dokument diskutierten Dämpfungseinrichtung und zwar insbesondere dem hier diskutierten ersten Beispiel oder zweiten Beispiel einer Dämpfungseinrichtung entspricht. Im Betrieb bilden Geberzylinder 29, Nehmerzylinder 30 und dazwischen liegende Druckleitungen 31 eine hydraulische Strecke, über die eine Kupplung, insbesondere eine Reibkupplung, eines Kraftfahrzeugs betätigt werden kann, indem eine Betätigung des Geberzylinders 29 zu einer entsprechenden Betätigungsbewegung vermittelt durch den Nehmerzylinder 30 führt.

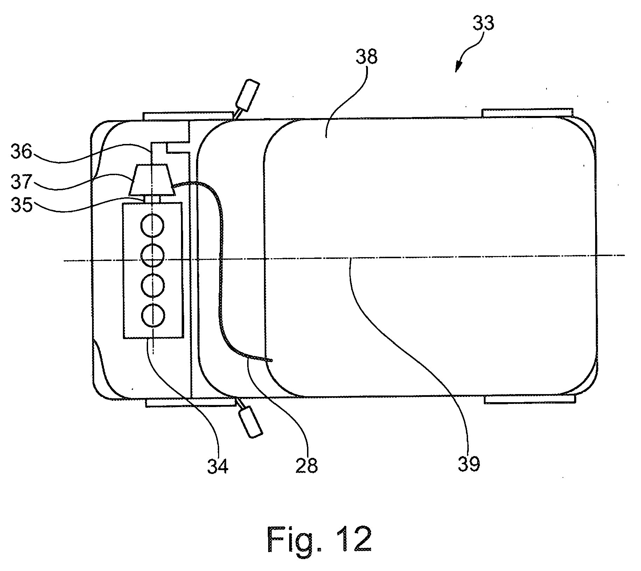

Fig. 12 zeigt sehr schematisch ein Kraftfahrzeug 33. Dieses umfasst eine Antriebseinheit 34 mit einer Abtriebswelle 35 und einem Antriebsstrang 36. Ferner umfasst das Kraftfahrzeug 33 eine Reibkupplung 37 zum lösbaren Verbinden der Abtriebswelle 35 mit dem Antriebsstrang 36. Die Reibkupplung 37 ist mit einer Kupplungsbetätigungseinrichtung 28 mit einer Dämpfungseinrichtung in koaxialer dem Prinzip eines Helmholtz-Resonators folgenden Bauweise ausgeführt. Insbesondere kann hier das oben diskutierte erste Beispiel oder zweite Beispiel einer Dämpfungseinrichtung 1 zum Einsatz kommen. Das Kraftfahrzeug 33 weist ferner eine Fahrerkabine 38 auf. Die Antriebseinheit 34 ist hier vor der Fahrerkabine 38 und quer zu einer Längsachse 39 des Kraftfahrzeugs 33 angeordnet.

### Bezugszeichenliste

- 1: Dämpfungseinrichtung
- 2: Druckleitung
- 3: Gehäuse
- 4: Dämpfervolumen
- 5: Außenwand
- 6: Innenwand
- 7: Längsachse
- 8: Stirnwand
- 9: Deckel
- 10: endseitige Öffnung
- 11: Hülse
- 12: Verbindungsmittel
- 13: Schnapphaken
- 14: Aufnahme
- 15: Kopf
- 16: Fase
- 17: Fortsatz
- 18: äußere Mantelfläche
- 19: Schlitz
- 20: Rampe
- 21: innere Mantelfläche
- 22: Dichtmittel
- 23: O-Ring
- 24: Ausgang
- 25: Schnapphaken
- 26: Fase
- 27: Aufnahme
- 28: Kupplungsbetätigungseinrichtung
- 29: Geberzylinder
- 30: Nehmerzylinder
- 31: Druckleitung
- 32: Dämpfungseinrichtung
- 33: Kraftfahrzeug
- 34: Antriebseinheit
- 35: Abtriebswelle
- 36: Antriebsstrang
- 37: Reibkupplung
- 38: Fahrerkabine
- 39: Längsachse

## Patentansprüche

1. Dämpfungseinrichtung (1, 32) zur Dämpfung von Druckschwingungen innerhalb einer Druckleitung (2, 31), insbesondere zur Betätigung der Kupplung (37) eines Kraftfahrzeuges (33), mit einem auf der Basis eines Helmholtz-Resonators arbeitenden hohlzylindrischen, ein Dämpfervolumen (4) bildenden doppelwandigen Gehäuse (3), wobei im Gehäuse (3) eine Hülse (11) ausgebildet ist, **dadurch gekennzeichnet, dass** die Hülse (11) zur Aufnahme der Druckleitung (2) in dem Gehäuse (3) dient, wobei Verbindungsmittel (12) zur Ausbildung einer kraft- und/oder formschlüssigen Verbindung zwischen der Druckleitung (2) und mindestens einem der folgenden Elemente:
a) der Hülse (11) und
b) dem Gehäuse (3)
ausgebildet sind.

2. Dämpfungseinrichtung (1, 32) nach Anspruch 1, bei der die Verbindungsmittel (12) zur Ausbildung einer Schnappverbindung geeignet und bestimmt sind.

3. Dämpfungseinrichtung (1, 32) nach einem der vorhergehenden Ansprüche, bei der die Hülse (11) innenseitig mindestens einen Schnapphaken (13) aufweist.

4. Dämpfungseinrichtung (1, 32) nach einem der vorhergehenden Ansprüche, bei der das Gehäuse (3) innenseitig mindestens einen Schnapphaken (25) aufweist.

5. Dämpfungseinrichtung (1, 32) nach einem der vorhergehenden Ansprüche, bei der die Hülse (11) mit dem Gehäuse (3) verpresst ist.

6. Kupplungsbetätigungseinrichtung (28), insbesondere zur Betätigung einer Kupplung (37) eines Kraftfahrzeugs (33), mit einer hydraulischen Strecke, umfassend mindestens eine Dämpfungseinrichtung (1, 32) nach einem der vorhergehenden Ansprüche, und einen Geberzylinder (29) und einen Nehmerzylinder (30), die über die Druckleitung (2, 31) miteinander verbunden sind.

7. Kupplungsbetätigungseinrichtung (28) nach Anspruch 6, bei der die Druckleitung (2, 31) in einem Verbindungsbereich mindestens eine Ausnehmung (14, 27) aufweist, die mit mindestens einem Schnapphaken (13, 25) an mindestens einem der folgenden Elemente der Dämpfungseinrichtung (1) zur Bildung einer Schnappverbindung korrespondiert:
a) der Hülse (11) und
b) dem Gehäuse (3).

8. Kupplungsbetätigungseinrichtung (28) nach Anspruch 6 oder 7, bei der die Druckleitung (2) aus einem metallischen Werkstoff ausgebildet ist.

9. Kraftfahrzeug (33) aufweisend eine Antriebseinheit (34) mit einer Abtriebswelle (35), einem Antriebsstrang (36) und einer Reibkupplung (37) zum lösbaren Verbinden der Abtriebswelle (35) mit dem Antriebsstrang (36) mit einer Kupplungsbetätigungseinrichtung (28) nach einem der Ansprüche 6 bis 8.

10. Kraftfahrzeug (33) nach Anspruch 9, bei dem die Antriebseinheit (34) im Kraftfahrzeug (33) vor einer Fahrerkabine (38) und quer zu einer Längsachse (39) des Kraftfahrzeugs (33) angeordnet ist

## Claims

1. Damping device (1, 32) for damping pressure oscillations within a pressure line (2, 31), in particular for actuating the clutch (37) of a motor vehicle (33), having a hollow-cylindrical, double-walled housing (3) which operates on the basis of a Helmholtz resonator and forms a damper volume (4), a sleeve (11) being configured in the housing (3), **characterized in that** the sleeve (11) serves to receive the pressure line (2) in the housing (3), connecting means (12) being configured for configuring a non-positive and/or positively locking connection between the pressure line (2) and at least one of the following elements:
a) the sleeve (11) and
b) the housing (3).

2. Damping device (1, 32) according to Claim 1, in which the connecting means (12) are suitable and intended for configuring a snap-action connection.

3. Damping device (1, 32) according to either of the preceding claims, in which the sleeve (11) has at least one snap-in hook (13) on the inner side.

4. Damping device (1, 32) according to one of the preceding claims, in which the housing (3) has at least one snap-in hook (25) on the inner side.

5. Damping device (1, 32) according to one of the preceding claims, in which the sleeve (11) is pressed to the housing (3).

6. Clutch actuating device (28), in particular for actuating a clutch (37) of a motor vehicle (33), having a hydraulic section, comprising at least one damping device (1, 32) according to one of the preceding claims, and a master cylinder (29) and a slave cylinder (30) which are connected to one another via the pressure line (2, 31).

7. Clutch actuating device (28) according to Claim 6, in which the pressure line (2, 31) has at least one recess (14, 27) in a connecting region, which recess (14, 27) corresponds with at least one snap-in hook (13, 25) on at least one of the following elements of the damping device (1) in order to form a snap-action connection:
a) the sleeve (11) and
b) the housing (3).

8. Clutch actuating device (28) according to Claim 6 or 7, in which the pressure line (2) is configured from a metallic material.

9. Motor vehicle (33) having a drive unit (34) with an output shaft (35), a drive train (36) and a friction clutch (37) for releasably connecting the output shaft (35) to the drive train (36) by way of a clutch actuating device (28) according to one of Claims 6 to 8.

10. Motor vehicle (33) according to Claim 9, in which the drive unit (34) is arranged in the motor vehicle (33) in front of a driver's cab (38) and transversely with respect to a longitudinal axis (39) of the motor vehicle (33).

## Revendications

1. Dispositif d'amortissement (1, 32) pour l'amortissement d'oscillations de pression à l'intérieur d'une conduite de pression (2, 31), en particulier pour l'actionnement de l'embrayage (37) d'un véhicule automobile (33), comprenant un boîtier (3) à double paroi, cylindrique creux, formant un volume d'amortisseur (4), fonctionnant sur la base d'un résonateur de Helmholtz, une douille (11) étant réalisée dans le boîtier (3), **caractérisé en ce que** la douille (11) sert à recevoir la conduite de pression (2) dans le boîtier (3), des moyens de liaison (12) étant prévus pour réaliser une connexion par engagement par force et/ou par engagement par correspondance de formes entre la conduite de pression (2) et au moins l'un des éléments suivants :
a) la douille (11) et
b) le boîtier (2).

2. Dispositif d'amortissement (1, 32) selon la revendication 1, dans lequel les moyens de liaison (12) sont appropriés et prévus pour réaliser une connexion par encliquetage.

3. Dispositif d'amortissement (1, 32) selon l'une quelconque des revendications précédentes, dans lequel la douille (11) présente du côté intérieur au moins un crochet d'encliquetage (13).

4. Dispositif d'amortissement (1, 32) selon l'une quelconque des revendications précédentes, dans lequel le boîtier (3) présente du côté intérieur au moins un crochet d'encliquetage (25).

5. Dispositif d'amortissement (1, 32) selon l'une quelconque des revendications précédentes, dans lequel la douille (11) est pressée avec le boîtier (3).

6. Dispositif d'actionnement d'embrayage (28), en particulier pour l'actionnement d'un embrayage (37) d'un véhicule automobile (33), comprenant une section hydraulique comprenant au moins un dispositif d'amortissement (1, 32) selon l'une quelconque des revendications précédentes, et un maître-cylindre (29) et un cylindre récepteur (30) qui sont connectés l'un à l'autre par le biais de la conduite de pression (2, 31).

7. Dispositif d'actionnement d'embrayage (28) selon la revendication 6, dans lequel la conduite de pression (2, 31) présente, dans une région de connexion, au moins un évidement (14, 27) qui, pour former une connexion par encliquetage, correspond avec au moins un crochet d'encliquetage (13, 25) au niveau d'au moins l'un des éléments suivants du dispositif d'amortissement (1) :
a) la douille (11) et
b) le boîtier (3).

8. Dispositif d'actionnement d'embrayage (28) selon la revendication 6 ou 7, dans lequel la conduite de pression (2) est réalisée à partir d'un matériau métallique.

9. Véhicule automobile (33) présentant une unité d'entraînement (34) avec un arbre de sortie (35), une chaîne cinématique (36) et un embrayage à friction (37) pour la connexion amovible de l'arbre de sortie (35) à la chaîne cinématique (36), avec un dispositif d'actionnement d'embrayage (28) selon l'une quelconque des revendications 6 à 8.

10. Véhicule automobile (33) selon la revendication 9, dans lequel l'unité d'entraînement (34) est disposée dans le véhicule automobile (33) avant une cabine de conducteur (38) et transversalement à un axe longitudinal (39) du véhicule automobile (33).
